# EUROPEAN PATENT SPECIFICATION

(11) **EP 4 502 418 B1**
(45) Date of publication and mention of the grant of the patent: **07.10.2026**
(21) Application number: 23777892.3
(22) Date of filing: 20.03.2023
(51) Int. Cl.: F16H 3/44, F16H 61/02, F16D 67/04, F16H 57/08, F16H 57/10, F16H 3/54, F16H 63/30, F16H 55/17

(54) **PLANETARY TRANSMISSION, POWER ASSEMBLY AND VEHICLE**
PLANETENGETRIEBE, ANTRIEBSEINHEIT UND FAHRZEUG
TRANSMISSION À TRAIN ÉPICYCLOÏDAL, ENSEMBLE DE PROPULSION ET VÉHICULE

(30) Priority: 29.03.2022 CN 202210315198
(43) Date of publication of application: 05.02.2025
(73) Proprietor: Tsing CCI Automobile (Beijing) Co., Ltd, Beijing 101520 (CN)
(72) Inventor: ZHANG, Xin, Miyun District Beijing 101520 (CN); WU, Zhixian, Miyun District Beijing 101520 (CN); ZHANG, Runsheng, Miyun District Beijing 101520 (CN); ZHANG, Quan, Miyun District Beijing 101520 (CN)
(74) Representative: Meissner Bolte Düsseldorf Patentanwälte Rechtsanwälte Partnerschaft mbB
(86) International application number: PCT/CN2023/082382
(87) International publication number: WO 2023/185518

(56) References cited:
- CN-A- 101 245 848
- CN-A- 103 407 435
- CN-A- 108 443 433
- CN-A- 108 443 433
- CN-A- 108 757 858
- CN-A- 113 389 858
- CN-A- 114 412 972
- CN-U- 208 331 230
- CN-U- 211 202 770
- GB-A- 829 854
- GB-A- 829 854
- GB-A- 966 355
- US-B1- 9 347 528

## Description

### TECHNICAL FIELD

The present invention relates to the technical field of transmissions, and in particular to a planetary transmission, a power assembly and a vehicle.

### BACKGROUND OF THE INVENTION

The planetary transmission comprises a sun gear, a planetary carrier and a ring gear. According to the basic principle of the planetary transmission, if any two components are engaged through a clutch, the rotation speeds of the three components will be the same, and the transmission will do a rigid transmission with a speed ratio of 1; if any component is braked by the brake, there will be a speed difference between the other two components, and the transmission will perform a variable speed transmission with a speed ratio of i. Variable speed transmission can be achieved through the cooperation of clutches and brakes. In the existing technology, the control of the clutch and the brake is relatively independent, requiring two oil circuits and two sets of actuators to control the clutch and brake respectively. Therefore, the oil circuit design and control structure of the traditional planetary transmission are complex.

In addition, when switching the transmission state of the transmission, two sets of actuators need to be matched accurately, otherwise the clutch and brake may be released at the same time, which will cause interruption of power transmission and seriously affect the normal operation of the equipment.

Therefore, the traditional planetary transmission has technical defects such as complex structural design and high control accuracy requirements.

GB 829854 A discloses a planetary gear transmission, comprising: a housing a sun gear rotatably arranged in the housing; a ring gear arranged around the sun gear; a plurality of planetary gears; and a planetary carrier; wherein each of planetary gears is respectively arranged on a planetary shaft and is meshed with the sun gear and the ring gear at the same time; and the planetary carrier is fixedly connected to each of the planetary shafts; wherein the planetary gear transmission further comprises:a sliding cylinder being rotatably fixed to and axially movable relative to the outside of the ring gear; a first friction ring mounted on the sliding cylinder and being rotatably fixed to and axially movable relative to the sliding cylinder; a second friction ring mounted on the planetary carrier and being rotatably fixed to and axially movable relative to the planetary carrier; a third friction ring mounted on the sliding sleeve ring gear and being rotatably fixed to and axially movable relative to the ring gear; a fourth friction ring mounted on the housing and being rotatably fixed to and axially movable relative to the housing; and a controller mounted on the housing and configured to oppose the fourth friction ring; wherein the first friction ring and the second friction ring are alternately distributed and they are configured to disengage with the action of the controller; and wherein the third friction ring and the fourth friction ring are alternately distributed and they are configured to be separated or engaged by the action of the controller.

### SUMMARY OF THE INVENTION

In order to solve the technical problems of complex structural design and high control precision requirements of traditional planetary transmissions, the present invention provides a planetary transmission.

The planetary transmission comprises a housing, a sun gear fixed in the housing, a ring gear arranged on the outside the sun gear, a plurality of planetary gears and a planetary carrier; wherein each of the planetary gears is respectively arranged on a planetary shaft and is meshed and connected with the sun gear and the ring gear at the same time, and the planetary carrier is fixedly connected to each of the planetary shafts. The planetary transmission further comprises a sliding cylinder arranged on the outside of the ring gear and being rotatably fixed to and axially movable relative to the ring gear, a sliding sleeve arranged on the outside of the sliding cylinder and being rotatably fixed to and axially movable relative to the sliding cylinder, an elastic member mounted between the sliding cylinder and the sliding sleeve, a first friction ring fixed on the sliding cylinder and being rotatably fixed to and axially movable relative to the sliding cylinder, a second friction ring mounted on the planetary carrier and being rotatably fixed to and axially movable relative to the planetary carrier, a third friction ring mounted on the sliding sleeve and being rotatably fixed to and axially movable relative to the sliding sleeve, a fourth friction ring mounted on the housing and configured to move axially relative to the housing, and a controller mounted on the housing and configured to be opposite to the fourth friction ring; wherein the first friction ring and the second friction ring are alternately distributed and mounted between the sliding sleeve and the sliding cylinder and are configured to engage with the action of the elastic member and disengage with the action of the controller, and the third friction ring and the fourth friction ring are alternately distributed and mounted between the controller and the sliding sleeve and are capable of being separated or engaged by the action of the controller.

In the present invention, the first friction ring and the second friction ring are alternately distributed to form a clutch, and the third friction ring and the fourth friction ring are alternately distributed to form a brake; the ring gear, the slide cylinder, the sliding sleeve, the first friction ring and the third friction ring keep rotating synchronously, the planetary carrier and the second friction ring keep rotating synchronously, and the housing and the fourth friction ring keep relatively still; when the first friction ring and the second friction ring are pressed against each other, the clutch engages the ring gear with the planetary carrier; when the third friction ring and the fourth friction ring are pressed against each other, the brake engages the housing with the ring gear, and the ring gear is braked.

In the present invention, the elastic member has a preload elastic force. When the controller is not working, the preload elastic force causes the sliding cylinder and the sliding sleeve to press the first friction ring and the second friction ring tightly together, and at the same time, there is no contact pressure between the third friction ring and the fourth friction ring. Therefore, when the controller is not working, the brake remains disengaged, the clutch remains engaged, and the planetary transmission maintains a rigid transmission with a speed ratio of 1.

When it is necessary to change the speed ratio of the planetary transmission, the controller is started, and the controller cooperates with the sliding sleeve to compress the third friction ring and the fourth friction ring. During the clamping process, the force of the controller is transmitted to the sliding cylinder and the sliding sleeve, causing the sliding cylinder to translate relative to the gear ring, and reducing the clamping force of the sliding sleeve on the first friction ring and the second friction ring; as the force of the controller gradually increases, the clamping force between the third friction ring and the fourth friction ring gradually increases, and synchronously, the clamping force between the first friction ring and the second friction ring gradually decreases. During this process, the clutch and the brake change synchronously, and the various components remain in contact; when the force of the controller is greater than the preload pull force of the elastic member, the third friction ring and the fourth friction ring are completely clamped, and at the same time, the force causes the sliding sleeve to translate relative to the slide cylinder, so that the first friction ring and the second friction ring are completely separated. At this time, the brake is fully engaged, the clutch is completely disengaged, and the planetary transmission performs speed transmission at a stable speed ratio i. It is easy to understand that the speed ratio of the planetary transmission can be switched from i back to 1 by reverse movement of the controller.

Therefore, compared with the traditional transmission, the planetary transmission of the present invention can realize the linkage adjustment of the two mechanisms of the brake and the clutch only through the controller, which is an actuator, thereby effectively simplifying the control structure of the transmission; more prominently, during the regulation process, while the clutch (or brake) is gradually engaged, the brake (or clutch) is gradually disengaged simultaneously, and the increase in the pressing force on the clutch (or brake) is consistent with the decrease in pressure on the brake (or clutch). Both rely on the pre-tightening elastic force of the elastic member to achieve adaptive adjustment, thereby effectively simplifying the control logic, reducing the accuracy requirements for linkage control of the brake and clutch, and making the transmission easier to control. When the planetary transmission of the present invention is used in a vehicle, since the brake and the clutch keep changing synchronously, they will not separate at the same time. Therefore, there will be no power interruption during the gear shifting process, thereby effectively improving the driving experience.

In the preferred technical solution of the above-mentioned planetary transmission, the planetary transmission further comprises: an input end connected to the sun gear; and an output end connected to the planetary carrier. Through the above configuration, power can be input from the sun gear through the input end, and output from the planetary carrier and the output end after being transmitted by the planetary transmission of the present invention.

In the preferred technical solution of the above-mentioned planetary transmission, a first limiting ring is fixed on the sliding cylinder, the elastic member has a preload push force and one end thereof is connected to the first limiting ring, and the other end thereof is connected to the sliding sleeve. Through the above configuration, the elastic member uses the preload push force force to push the sliding sleeve to the right side of the sliding cylinder and press the first friction ring and the second friction ring into joint.

In the preferred technical solution of the above-mentioned planetary transmission, a second limiting ring is fixed on the sliding cylinder. The elastic member has a preload pull force and one end thereof is connected to the second limiting ring, and the other end thereof is connected to the sliding sleeve. Through the above configuration, the elastic member uses the preload pull force to pull the sliding sleeve to the right side of the sliding cylinder and pressurize the first friction ring and the second friction ring into joint.

In the preferred technical solution of the above-mentioned planetary transmission, a limiting portion is fixed on the housing, and the limiting portion is opposite to the left end of the sliding cylinder. When the planetary transmission is driven at speed ratio i, the brake is in the engaged state and the clutch is in the disengaged state. In this state, the controller keeps working. In order to ensure the reliable engagement of the brake, the force of the controller is greater than the preload elastic force of the elastic member. This force is transmitted to the sliding cylinder through the elastic member, which will cause the sliding cylinder to bear a larger axial force. Through the above configuration, the limiting portion is opposite to the left end of the sliding cylinder. When the sliding cylinder slides to the left under the action of the controller, the limiting portion abuts the left end of the sliding cylinder and bears the axial force of the sliding cylinder, thereby effectively improving the stability of the mechanism.

In the preferred technical solution of the above-mentioned planetary link transmission, the sliding cylinder is connected to the ring gear through a spline. Through the above configuration, the sliding cylinder can rotate synchronously with the ring gear, and at the same time, the sliding cylinder can translate relative to the ring gear along the spline. This connection method has a simple structure and stable and reliable transmission.

In the preferred technical solution of the above-mentioned planetary transmission, a limiting platform that cooperates with the ring gear is fixed on the sliding cylinder. Through the above configuration, the limiting platform can limit the translation range of the sliding cylinder so that it can translate and slide within an appropriate range.

In the preferred technical solution of the above-mentioned planetary transmission, a return member is fixed between the sliding cylinder and the ring gear. When the controller is working, the sliding cylinder will move to the left. After the controller stops working, the sliding cylinder will be in a translatable state. Through the above configuration, the return member can return the sliding cylinder to an appropriate position for stable rotation, thereby effectively reducing the axial shaking of the sliding cylinder and improving the smoothness of the transmission operation.

In the preferred technical solution of the above-mentioned planetary transmission, the elastic member comprises a plurality of springs, and the plurality of springs are arranged along the circumferential direction of the sliding cylinder. Through the above configuration, the circumferentially arranged springs can make the sliding cylinder and the sliding sleeve evenly stressed, thereby ensuring that the sliding sleeve is more stable and smooth when translating relative to the sliding cylinder.

In the preferred technical solution of the above-mentioned planetary transmission, a preload adjusting member is fixed at the end of the elastic member. Through the above configuration, the preload adjusting member can easily adjust the preload elastic force of the elastic member, thereby better matching the design requirements.

In the preferred technical solution of the above-mentioned planetary transmission, the elastic member comprises a disc spring, and the disc spring is arranged on the sliding cylinder. Through the above configuration, the disc spring can make the structure more concise.

In the preferred technical solution of the above-mentioned planetary transmission, a third limiting ring is fixed on the sliding cylinder, and the third limiting ring contacts the first friction ring. Through the above configuration, the third limiting ring can limit the translation range of the first friction ring; when the clutch is required to be engaged, the third limiting ring can cooperate with the sliding sleeve to compress the first friction ring and the second friction ring. During the process, one end of the elastic member acts on the sliding cylinder, and the other end of the elastic member acts on the third limiting ring through the sliding sleeve, and then also acts on the sliding cylinder. This preferred technical solution can ensure that the pre-tightening elastic force of the elastic member only acts inside the sliding cylinder, preventing the transmission from bearing excessive axial force, thereby effectively improving the structural stability of the transmission.

In the preferred technical solution of the above-mentioned planetary transmission, the sliding sleeve has a first clamping portion, which is opposite to the third limiting ring and contacts the first friction ring; the alternately distributed first friction ring and the second friction ring are arranged between the first clamping portion and the third limiting ring. The sliding sleeve and the first friction ring rotate synchronously, and there is no relative rotational speed between the two. Through the above configuration, when the sliding sleeve presses the first friction ring and the second friction ring into engagement through the first clamping portion, there is no relative friction between the sliding sleeve and the first friction ring, thereby improving the reliability of the sliding sleeve.

In the preferred technical solution of the above-mentioned planetary transmission, the sliding sleeve is connected to the sliding cylinder through a spline. Through the above configuration, the sliding sleeve can rotate synchronously with the sliding cylinder, and at the same time the sliding sleeve can translate relative to the sliding cylinder along the spline. This connection method has a simple structure and stable and reliable transmission.

In the preferred technical solution of the above-mentioned planetary transmission, the sliding sleeve has a second clamping portion, which is opposite to the controller and contacts the third friction ring; the alternately distributed third friction ring and the fourth friction ring are arranged between the second clamping portion and the controller. The sliding sleeve and the third friction ring rotate synchronously, and there is no relative rotation speed between them. Through the above configuration, when the sliding sleeve presses and engages the third friction ring and the fourth friction ring through the second clamping portion, there is no relative friction between the sliding sleeve and the third friction ring, thereby improving the reliability of the sliding sleeve.

In the preferred technical solution of the above-mentioned planetary transmission, the controller comprises: a pressure cylinder, the active end of the pressure cylinder faces the second second clamping portion, and the liquid inlet of the pressure cylinder extends to the housing surface; and a piston slidably assembled in the pressure cylinder and capable of coming into contact with the fourth friction ring. This preferred technical solution provides a hydraulic or pneumatic actuator, which realizes linkage control of clutches and brakes through the reciprocating movement of the piston in the pressure cylinder. Taking the working state of brake engagement and clutch separation as an example, the piston slides toward the second clamping portion and presses and engages the third friction ring and the fourth friction ring. Through the above configuration, the piston comes into contact with the fourth friction ring. Since the two friction rings are relatively stationary, and there is no relative friction between the piston and the fourth friction ring, so the piston can work more smoothly.

In the preferred technical solution of the above-mentioned planetary transmission, the first friction ring is connected to the sliding cylinder through a spline, the second friction ring and the planet carrier are connected by splines, and the third friction ring is connected to the planet carrier through a spline. The third friction ring is connected to the sliding sleeve through a spline, and the fourth friction ring is connected to the housing through a spline. Through the above configuration, the connection stability between various components can be effectively improved.

The present invention also provides a power assembly, which comprises: a driver; and the planetary transmission according to any of the above-mentioned preferred technical solutions, the power of the driver is input from the sun gear.

The invention also provides a vehicle, which comprises: a vehicle body; and the power assembly in the above-mentioned technical solution, the power assembly is mounted on the vehicle body.

### BRIEF DESCRIPTION OF THE FIGURES

The preferred embodiments of the present invention will be described below with reference to the drawings, in which:
- Fig. 1: is a schematic structural diagram of an embodiment of the planetary transmission of the present invention.
- Fig. 2: is a force analysis diagram of each component during the brake engagement process in an embodiment of the planetary transmission of the present invention.
- Fig. 3: is a schematic structural diagram of an embodiment of the planetary transmission of the present invention in its initial state.
- Fig. 4: is a schematic structural diagram of an embodiment of the planetary transmission of the present invention in the first stage.
- Fig. 5: is a schematic structural diagram of an embodiment of the planetary transmission of the present invention in the second and third stages.
- Fig. 6: is a schematic structural diagram of an embodiment of the planetary transmission of the present invention in the fourth and fifth stages.
- Fig. 7: is a force analysis diagram of each component during the clutch engagement process in an embodiment of the planetary transmission of the present invention.

### LIST OF REFERENCE NUMBERS:

- A: planetary transmission
- 1: housing
- 10: fourth friction ring
- 11: limiting portion
- 2: sun gear
- 2a: input end
- 3: planetary gear
- 31: planetary shaft
- 4: ring gear
- 5: planetary carrier
- 50: second friction ring
- 51: planetary disk
- 52: planetary ring
- 5a: output end
- 6: sliding cylinder
- 60: first friction ring,
- 601: limiting platform
- 602: return member
- 611: first limiting ring
- 612: second limiting ring
- 613: third limiting ring
- 614: fourth limiting ring
- 7: sliding sleeve
- 70: third friction ring
- 71: first clamping portion
- 72: second clamping portion
- 8: elastic member
- 9: controller
- 91: pressure cylinder
- 92: piston
- 911: liquid inlet
- k1: clutch
- k2: brake
- L: central shaft

### DETAILED DESCRIPTION OF PREFERRED EMBODIMENTS

Preferred embodiments of the present invention will be described below with reference to the accompanying drawings. Those skilled in the art should understand that these embodiments are only used to explain the technical principles of the present invention and are not intended to limit the scope of the present invention.

It should be noted that in the description of the present invention, the terms "left", "right", "inner", "outer" and other terms indicating the direction or positional relationship are based on the direction or positional relationship shown in the drawings, which is merely for convenience of description and does not indicate or imply that the device or element must have a specific orientation, be constructed and operate in a specific orientation, and therefore cannot be construed as a limitation of the present invention. Furthermore, the terms "first", "second", "third" and "fourth" are used for descriptive purposes only and are not to be construed as indicating or implying relative importance.

In addition, it should be noted that in the description of the present invention, unless otherwise clearly specified and limited, the terms "assembly", "arrangement", "setting" and "connection" should be understood in a broad sense. For example, it can be a fixed connection, a detachable connection, or an integral connection; it can be a direct connection, an indirect connection through an intermediate medium, or the internal connection of two elements. For those skilled in the art, the specific meanings of the above terms in the present invention can be understood according to specific circumstances.

In order to solve the technical problems of complex structural design and high control accuracy requirements of traditional planetary transmissions, the preferred embodiment of the present invention provide a planetary transmission A. The planetary transmission A comprises a housing 1, a sun gear 2 fixed in the housing 1, a ring gear 4 arranged on the outside of the sun gear 2, a plurality of planetary gears 3 and a planetary carrier 5; wherein each of the planetary gear 3 is respectively arranged on a planetary shaft 31 and is meshed and connected with the sun gear 2 and the ring gear 4 at the same time; and the planetary carrier 5 is fixedly connected to each planetary shaft 31; the planetary transmission A further comprises a sliding cylinder 6 arranged on the outside of the ring gear 4 and being rotatably fixed to and axially movable relative to the ring gear 4, a sliding sleeve 7 arranged on the outside of the sliding cylinder 6 and being rotatably fixed to and axially movable relative to the sliding cylinder 6, an elastic member 8 mounted between the sliding cylinder 6 and the sliding sleeve 7, a first friction ring 60 fixed on the sliding cylinder 6 and being rotatably fixed to and axially movable relative to the sliding cylinder 6, a second friction ring 50 mounted on the planetary carrier 5 and being rotatably fixed to and axially movable relative to the planetary carrier 5, a third friction ring 70 mounted on the sliding sleeve 7 and is being rotatably fixed to and axially movable relative to the sliding sleeve 7, a fourth friction ring 10 mounted on the housing 1 and configured to move axially relative to the housing 1 and a controller 9 mounted on the housing 1 and configured to be opposite to the fourth friction ring 10; wherein the first friction ring 60 and the second friction ring 50 are alternately distributed and mounted between the sliding sleeve 7 and the sliding cylinder 6 and are configured to engage with the action of the elastic member 8 and disengage with the action of the controller 9; and the third friction ring 70 and the fourth friction ring 10 are alternately distributed and mounted between the controller 9 and the sliding sleeve 7 and are capable of being separated or engaged by the action of the controller 9.

The planetary transmission A in the embodiment of the present invention has a wide range of application prospects. It can be combined with a driver to form a power assembly. The power of the driver is input from the sun gear 2, and is transmitted by the planetary transmission A and then output from the planetary carrier 5. The power assembly is suitable for assembly on various types of vehicles such as electric vehicles and fuel vehicles, and can effectively improve the shifting experience of the vehicle.

The planetary transmission A in the embodiment of the present invention will be further described below with reference to the accompanying drawings.

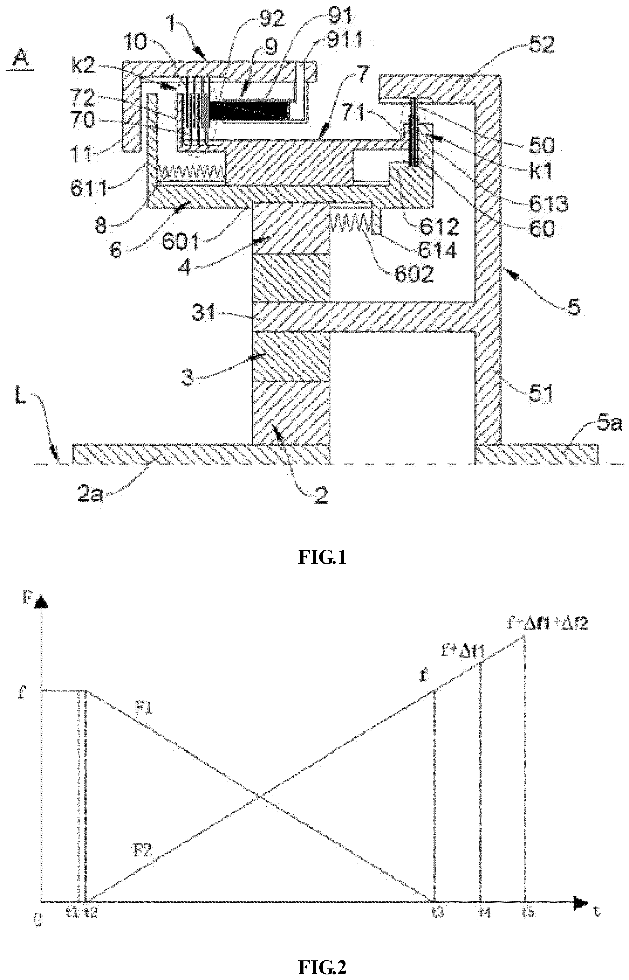

Figure 1 is a schematic structural diagram of an embodiment of the planetary transmission of the present invention. As shown in Figure 1, the planetary transmission A comprises a housing 1, a sun gear 2, a planetary gear 3, a ring gear 4 and a planetary carrier 5. Wherein, the sun gear 2 is fixed inside the housing 1 and arranged along a central axis L; the ring gear 4 is arranged on the outside of the sun gear 2; the planetary gears 3 are arranged between the ring gear 4 and the sun gear 2 and meshingly connected. The number of planetary gears 3 can be arranged according to design requirements, such as 3, 4 or 5; the planetary shaft 31 of the planetary gear 3 extends along its own axial direction and is fixedly connected to the planetary carrier 5; the sun gear 2, the planetary gear 3, the ring gear 4 and the planetary carrier 5 form a meshing transmission mechanism. As shown in Figure 1, the input end 2a of the driver is arranged along the central axis L and is fixedly connected to the sun gear 2. The output end 5a is connected to the planetary carrier 5 and extends along the central axis L. Optionally, the input end 2a and the output end 5a can be a solid shaft, a hollow shaft cylinder or other suitable structures.

As shown in Figure 1, a sliding cylinder 6 is arranged on the outside of the ring gear 4, an internal spline is mounted on the inner cylinder wall of the sliding cylinder 6, a matching external spline is mounted on the outer peripheral wall of the ring gear 4, and the internal and external splines are parallel to the central axis L, and the sliding cylinder 6 is connected to the ring gear 4 through the splines. Under the action of the splines, the slide cylinder 6 can rotate synchronously with the ring gear 4, and the slide cylinder 6 can translate axially relative to the ring gear 4. It is easy to imagine that other suitable structures can also be used to form a sliding connection structure that can rotate synchronously between the sliding cylinder 6 and the ring gear 4.

As shown in Fig. 1, a limiting platform 601 is also mounted on the inner cylinder wall of the sliding cylinder 6. The limiting platform 601 is located at one end of the internal spline and is used to limit the translation range of the sliding cylinder 6 relative to the ring gear 4.

Optionally, the limiting platform 601 is integrally formed with the slide cylinder 6, and the limiting platform 601 is formed by the inner cylinder wall of the slide cylinder 6 extending radially inward. As shown in Fig. 1, a return member 602 is further mounted on the inner cylinder wall of the sliding cylinder 6. The return member 602 is located at the other end of the internal spline and is used to reset the sliding cylinder 6 and the gear ring 4 to a proper position after relative movement. Optionally, the return member 602 comprises a fourth limiting ring 614 arranged on the inner cylinder wall of the sliding cylinder 6 and a reset elastic member connected between the fourth limiting ring 614 and the gear ring 4. Wherein, the fourth limiting ring 614 can be integrally formed with the sliding cylinder 6, or fixed to the inner cylinder wall of the sliding cylinder 6 by welding, bolts, pins and other connecting methods; the reset elastic member can be a coil spring, or an elastic washer or other suitable structure. It is easy to understand that the limit platform 601 and the return member 602 can also be replaced by other suitable structures to limit the relative translation range of the sliding cylinder 6 and the gear ring 4.

As shown in Fig. 1, a first limiting ring 611 is mounted on the sliding cylinder 6, and the first limiting ring 611 is located on the left side of the sliding sleeve 7. Optionally, the first limiting ring 611 is formed by folding the left cylinder end of the sliding cylinder 6 outward. Alternatively, the first limiting ring 611 is fixed on the left end of the sliding cylinder 6 by welding, bolts, pins, etc. As shown in Fig. 1, a second limiting ring 612 is further mounted on the sliding cylinder 6, and the second limiting ring 612 is located on the right side of the sliding sleeve 7. Optionally, the second limiting ring 612 is integrally formed with the sliding cylinder 6, and the second limiting ring 612 is formed by extending radially outward from the outer cylinder wall of the sliding cylinder 6. Alternatively, the second limiting ring 612 is fixed on the sliding cylinder 6 by welding, bolts, pins, etc. As shown in Figure 1, the first friction ring 60 is arranged on the outside of the second limiting ring 612, an internal spline is mounted on the inner ring wall of the first friction ring 60, and a matching external spline is mounted on the outer peripheral wall of the second limiting ring 612. The internal and the external splines are parallel to the central axis L, and the first friction ring 60 is connected to the second limiting ring 612 through the splines. Under the action of the splines, the first friction ring 60 can rotate synchronously with the second limiting ring 612, and the first friction ring 60 can axially translate relative to the second limiting ring 612. As shown in Fig. 1, a third limiting ring 613 is also mounted on the right side of the second limiting ring 612. Optionally, the third limiting ring 613 and the second limiting ring 612 are integrally formed. Alternatively, the third limiting ring 613 is fixed on the right side of the second limiting ring 612 by welding, bolts, pins, etc. The outer diameter of the third limiting ring 613 is larger than the outer diameter of the second limiting ring 612. The third limiting ring 613 directly contacts the first friction ring 60 and limit its translation range.

It is easy to understand that in some embodiments of the present invention, the second limiting ring 612 of the sliding cylinder 6 is omitted. Correspondingly, the first friction ring 60 is directly arranged on the sliding cylinder and connected to it through a spline, and the third limiting ring 613 is mounted on the right side of the first friction ring 60 to limit its translation range. Optionally, the third limiting ring 613 is integrally formed with the sliding cylinder 6, and the third limiting ring 613 is formed by folding the right side of the sliding cylinder 6 outward. Alternatively, the third limiting ring 613 is fixed on the right end of the sliding cylinder 6 by welding, bolts, pins, etc.

As shown in Fig. 1, a sliding sleeve 7 is mounted on the outside of the sliding cylinder 6, and the sliding sleeve 7 is located between the first limiting ring 611 and the third limiting ring 613. An internal spline is mounted on the inner cylinder wall of the sliding sleeve 7, and a matching external spline is mounted on the outer cylinder wall of the sliding cylinder 6, and the internal and external splines are parallel to the central axis L, and the sliding cylinder 6 is connected to the sliding sleeve 7 through the splines. Under the action of the splines, the sliding sleeve 7 can rotate synchronously with the sliding cylinder 6, and the sliding sleeve 7 can translate axially relative to the sliding barrel 6. It is easy to imagine that the sliding sleeve 7 and the sliding cylinder 6 can also form a sliding connection structure that can rotate synchronously through other suitable structures.

As shown in Fig. 1, a first clamping portion 71 is mounted on the right side of the sliding sleeve 7. Optionally, the first clamping portion 71 is integrally formed with the sliding sleeve 7. The first clamping portion 71 is formed by extending the right end of the sliding sleeve 7 along the central axis L and then folding outward. Alternatively, the first clamping portion 71 is fixed on the right end of the sliding sleeve 7 by welding, bolts, pins, etc. The first clamping portion 71 is opposite to the third limiting ring 613 and directly contacts the first friction ring 60. As shown in Fig. 1, a second clamping portion 72 is mounted on the left side of the sliding sleeve 7. Optionally, the second clamping portion 72 is integrally formed with the sliding sleeve 7. The second clamping portion 72 is formed by extending the left end of the sliding sleeve 7 along the central axis L and then folding outward. Alternatively, the second clamping portion 72 is fixed on the left end of the sliding sleeve 7 by welding, bolts, pins, etc. As shown in Fig. 1, the second clamping portion 72 is opposite to the first limiting ring 611. As shown in Fig. 1, a third friction ring 70 is mounted on the outer peripheral wall of the sliding sleeve 7. An external spline is mounted on the outer peripheral wall of the sliding sleeve 7, and a matching internal spline is mounted on the inner ring wall of the third friction ring 70. The internal and external splines are parallel to the central axis L, and the friction ring 70 is connected to the sliding sleeve 7 through the splines. Under the action of the splines, the third friction ring 70 can rotate synchronously with the sliding sleeve 7, and the third friction ring 70 can translate axially relative to the sliding sleeve 7. It is easy to imagine that the third friction ring 70 and the sliding sleeve 7 can also form a sliding connection structure that can rotate synchronously through other suitable structures. As shown in Fig. 1, the third friction ring 70 is located on the left side of the sliding sleeve 7 and is disposed close to the second clamping portion 72. The third friction ring 70 directly contacts the second clamping portion 72.

As shown in Fig. 1, an elastic member 8 is connected between the sliding cylinder 6 and the sliding sleeve 7. Optionally, one end of the elastic member 8 is connected to the first limiting ring 611 and the other end is connected to the sliding sleeve 7. The elastic member 8 has a preload pull force. In a natural state, the elastic member 8 pushes the sliding sleeve 7 to the right side of the sliding cylinder 6. It is easy to understand that one end of the elastic member 8 can also be connected to the second limiting ring 612 and the other end is connected to the sliding sleeve 7. The elastic member 8 has a preload pull force. In a natural state, the elastic member 8 pulls the sliding sleeve 7 to the right side of the sliding cylinder 6. As shown in Fig. 1, the elastic member 8 comprises a plurality of coil springs, and the coil springs are evenly distributed in the circumferential direction of the sliding cylinder 6. Alternatively, the elastic member 8 comprises a disk spring, which is arranged on the sliding cylinder 6. It is easy to imagine that the elastic member 8 can also be an elastic washer or other suitable elastic components.

In order to facilitate the adjustment of the preload elastic force of the elastic member 8, a preload adjustment member can also be mounted at the end of the elastic member 8 (in order to make the overall structure of the transmission be concise and clear, the size of the preload adjustment member is not shown in Figure 1). The preload adjustment member comprises an adjustment ring arranged on the sliding cylinder 6, the adjustment ring and the first limit ring 611 are connected by an adjustment screw, one end of the elastic member 8 is connected to the adjustment ring, and the other end is connected to the sliding sleeve 7, and the distance between the adjustment ring and the first limit ring 611 is adjusted by rotating the adjustment screw, thereby changing the preload elastic force of the elastic member 8. When the elastic member 8 is the coil springs, the coil springs are evenly distributed on the adjusting ring. It is easy to imagine that the preload adjusting member can also have other suitable structures.

As shown in Fig. 1, the planetary carrier 5 comprises a planetary disk 51 and a planetary ring 52. Wherein, the planetary carrier 5 is fixedly connected to the planetary shaft 31 through the planetary disk 51. The planetary shaft 31 can be fixed on the planetary disk 51 by welding, bolting, etc. Alternatively, the planetary shaft 31 and the planetary disk 51 are integrally formed. The planetary carrier 5 is fixedly connected to the output shaft 5a through the planetary disk 51. The output shaft 5a can be fixed on the planetary disk 51 by means of splines, flanges, welding or bolt connections. Alternatively, the output shaft 5a and the planetary disk 51 are integrally formed. As shown in Fig. 1, the planetary ring 52 is arranged on the outer edge of the planetary disk 51. Optionally, the planetary ring 52 and the planetary disk 51 are integrally formed, and the planetary ring 52 is formed by folding the outer edge of the planetary disk 51 by 90 degrees. Alternatively, the planetary rings 52 are fixed on the planetary disk 51 by welding or other suitable means. It is easy to understand that the planetary carrier 5 can also have other suitable structures.

As shown in Fig. 1, the planetary ring 52 is partially arranged on the outside of the sliding cylinder 6, and a second friction ring 50 is mounted on the inner ring wall of the planetary ring 52. An internal spline is mounted on the inner ring wall of the planetary ring 52, and a matching external spline is mounted on the outer ring wall of the second friction ring 50. The internal and external splines are parallel to the central axis L. The second friction ring 50 and the planetary rings 52 are connected by the splines. Under the action of the splines, the second friction ring 50 can rotate synchronously with the planetary ring 52, and the second friction ring 50 can translate axially relative to the planetary ring 52. It is easy to imagine that the second friction ring 50 and the planetary ring 52 can also form a synchronously rotating sliding connection structure through other suitable structures. As shown in Figure 1, the second friction ring 50 and the first friction ring 60 are alternately arranged and form a clutch k1. The clutch k1 is located between the first clamping portion 71 on the sliding sleeve 7 and the third limiting ring 613 on the sliding cylinder 6. When the first clamping portion 71 and the third limiting ring 613 press the clutch k1, the first clamping portion 71 and the third limiting ring 613 can respectively directly come into contact with the first friction ring 60.

As shown in Figure 1, the controller 9 is mounted on the housing 1. The controller 9 comprises a pressure cylinder 91 and a piston 92. Wherein, the pressure cylinder 91 is arranged parallel to the central axis L, the action end of the pressure cylinder 91 faces the second clamping portion 72, and the liquid inlet 911 of the pressure cylinder 91 extends to the surface of the housing 1. The piston 92 is slidably fitted in the pressure cylinder 91. The controller 9 can be hydraulically driven or pneumatically driven. As shown in Fig. 1, a fourth friction ring 10 is mounted on the inner circumferential wall of the housing 1. An internal spline is mounted on the inner peripheral wall of the housing 1, and a matching external spline is mounted on the outer ring wall of the fourth friction ring 10. The internal and external splines are parallel to the central axis L. The fourth friction ring 10 and the housing 1 are connected through the splines. Under the action of the splines, the fourth friction ring 10 can only translate axially relative to the housing 1. It is easy to imagine that the fourth friction ring 10 and the housing 1 can also be slidably connected through other suitable structures. As shown in Fig. 1, the fourth friction ring 10 and the third friction ring 70 are alternately arranged and form a brake k2, and the brake k2 is located between the second clamping portion 72 and the piston 92. When the second clamping portion 72 and the piston 92 press the brake k2, the second clamping portion 72 directly contacts the third friction ring 70, and the piston 92 directly contacts the fourth friction ring 10. It is easy to understand that the controller 9 can also be an electromagnetic drive, a mechanical drive or other suitable drive structure, as long as the controller 9 can cooperate with the second clamping portion 72 to compress or release the brake k2.

As shown in Fig. 1, a limiting portion 11 is also mounted on the housing 1, and the limiting portion 11 is located at the left end of the housing 1. Optionally, the limiting portion 11 is integrally formed with the housing 1, and the limiting portion 11 is formed by turning the left end of the housing 1 90 degrees. Alternatively, the limiting portion 11 is fixed on the left end of the housing 1 by welding, bolts, pins, etc. As shown in Fig. 1, the limiting portion 11 is annular, the inner ring diameter of the limiting portion 11 is smaller than the outer ring diameter of the first limiting ring 611, and the limiting portion 11 is opposite to the first limiting ring 611. It is easy to understand that the inner ring diameter of the limiting portion 11 can be further reduced to be smaller than the outer ring diameter of the sliding cylinder 6, and at this time the limiting portion 11 is directly opposite to the left end of the sliding cylinder 6.

The working process of the planetary transmission A in the embodiment of the present invention will be further described below with reference to the accompanying drawings. Fig. 2 is a force analysis diagram of various components during the brake engagement process in an embodiment of a planetary transmission of the present invention. During the gradual engagement of brake k2, the planetary transmission A sequentially goes through the first stage, the second stage, the third stage, the fourth stage and the fifth stage from the initial state, which respectively correspond to the time t in Figure 2, which goes through the five time intervals from time 0 of (0, t1], (t1, t2], (t2, t3], (t3, t4] and (t4, t5) in sequence.

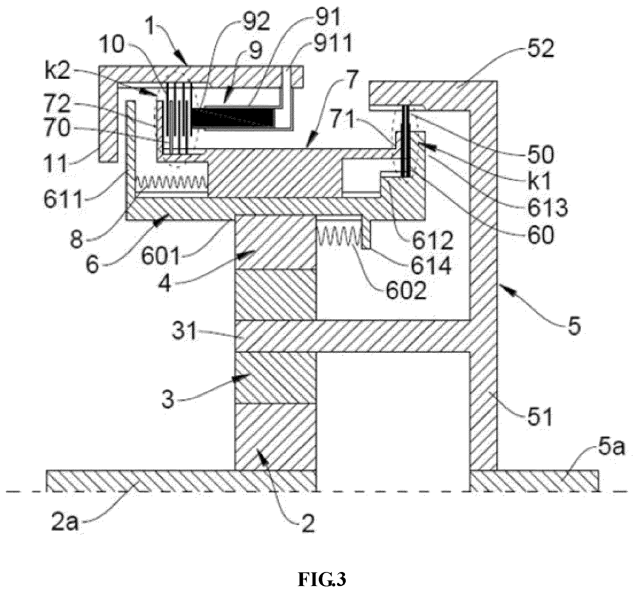

Figure 3 is a schematic structural diagram of an embodiment of the planetary transmission of the present invention in its initial state. As shown in Figure 3, in the initial state, the controller 9 does not work, the brake k2 is released, there is no contact pressure and a gap between the third friction ring 70 and the fourth friction ring 10; the elastic member 8 has a preload elastic force f, The elastic member 8 pushes the sliding sleeve 7 to the right side of the sliding cylinder 6, so that the first clamping portion 71 cooperates with the third limiting ring 613 to compress the clutch k1; the return member 602 causes the limiting platform 601 of the sliding cylinder 6 to rest against the ring gear 4, maintaining the stable relative position between the slide cylinder 6 and the ring gear 4. This initial state corresponds to the time t=0 in Figure 2, where the elastic force of the elastic member FO=f, the clamping force of the clutch k1 F1=f, and the clamping force of the brake k2 F2=0. In this initial state, clutch k1 is in a fully engaged state, brake k2 is in a fully disengaged state, the planetary carrier 5 is connected to the ring gear 4, and the speed ratio of the planetary transmission A is 1. This speed ratio is suitable for medium and high speed driving stages of the vehicle.

After the vehicle starts, it will keep running at medium or high speed for a long time. When the planetary transmission A according to the embodiment of the present invention is used in the vehicle, it will keep working in this initial state for a long time. Since the controller 9 does not work in the initial state, the controller 9 does not need to provide hydraulic pressure, so the controller 9 in the embodiment of the present invention suffers less wear and has a good energy-saving effect. It is worth emphasizing that in this initial state, the preload elastic force of the elastic member 8 can be adjusted through the preload adjustment member to change the clamping force F1 of the clutch k1, so that the planetary transmission A can meet the clamping force requirements of different equipment such as vehicles, ships, aircraft, etc.

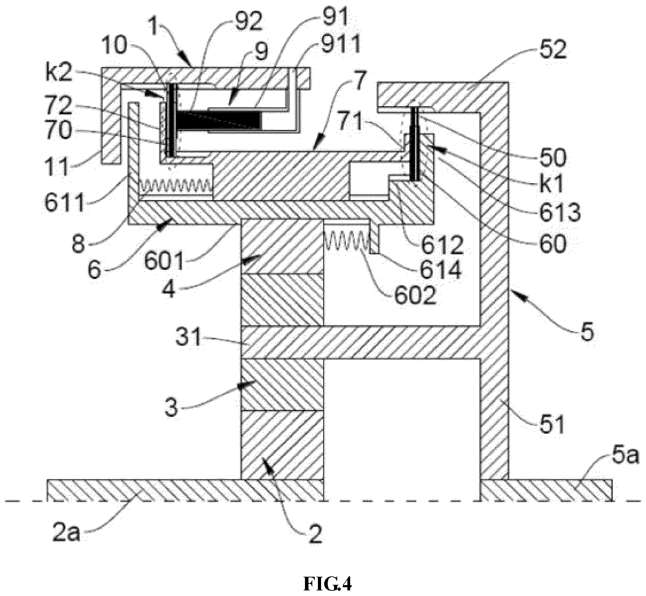

When it is necessary to change the working state of the planetary transmission A, it is only necessary to start the controller 9 to work. Figure 4 is a schematic structural diagram of the first stage of an embodiment of the planetary transmission of the present invention. As shown in Figure 4, when the controller 9 starts working, the hydraulic oil enters the pressure cylinder 91 from the liquid inlet 911, and the hydraulic oil pushes the piston 92 to slide toward the second clamping portion 72. The piston 92 directly contacts the fourth friction ring 10 and pushes it to the left, so that the gap between the third friction ring 70 and the fourth friction ring 10 gradually decreases, and the alternating third friction rings 70 and fourth friction rings 10 gradually fit together and are clamped by the piston 92 and the second clamping portion 72. This first stage corresponds to the period when t is at (0, t1] in Figure 2, where the elastic force of the elastic member FO=f, the clamping force of the clutch k1 F1=f, and the clamping force of the brake k2 F2=0. At t= t1, as shown in Fig. 4, the third friction ring 70 and the fourth friction ring 10 are only in contact with each other, and there is no clamping force on the brake k2.

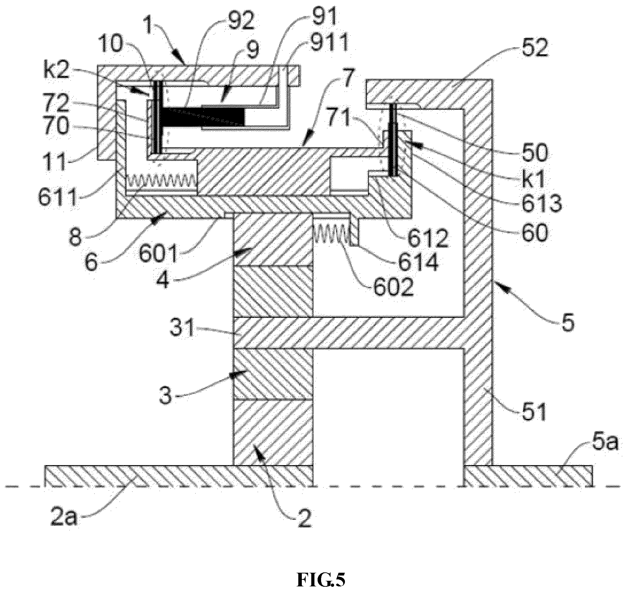

After the third friction ring 70 comes into contact with the fourth friction ring 10, the planetary transmission A enters the second stage with the injection of hydraulic oil. Figure 5 is a schematic structural diagram of the second and third stages of an embodiment of the planetary transmission of the present invention. As shown in Figure 5, the piston 92 continues to move to the left, pushing the brake k2, sliding sleeve 7, sliding cylinder 6 and clutch k1 to move to the left as a whole until the first limiting ring 611 of the sliding cylinder 6 comes into contact with the limiting portion 11. During this process, the return elastic member undergoes deformation. This second stage corresponds to the period when t is in (t1, t2] in Figure 2 (compared to the preload elastic force of the elastic member 8, the impact of the deformation force of the return elastic member on the clutch k1 and brake k2 is negligible), so it is not reflected in Figure 2), the elastic force of the elastic member FO=f, the clamping force of the clutch k1 F1=f, and the clamping force of the brake k2 F2=0. When t=t2, as shown in Fig. 5, the first limiting ring 611 is in contact with the limiting portion 11.

As the oil pressure in the pressure cylinder 91 gradually increases, the third friction ring 70 and the fourth friction ring 10 are pressed together by the piston 92 and the second clamping portion 72, and the clamping force F2 of the brake k2 gradually increases. The force analysis of the sliding sleeve 7 shows that F0=F1+F2 (the force of the preload adjustment member is negligible). The force of the piston 92 is transmitted to the first clamping portion 71 through the sliding sleeve 7, so that the clamping force of the first clamping portion 71 on the first friction ring 60 and the second friction ring 50 gradually decreases, and thus the clamping force F1 of the clutch k1 gradually decreases. At this time, the planetary transmission A enters the third stage. During this process, the increase in the clamping force F2 of the brake k2 is equal to the decrease in the clamping force F1 of the clutch k1, that is, in the process of the brake k2 gradually engaging, the clutch k1 is gradually released synchronously. This third stage corresponds to the period when t is at (t2, t3] in Figure 2. The elastic force F0 of the elastic member 8 is equal to f, the clamping force F1 of the clutch k1 decreases from f to 0, and the clamping force F2 of the brake k2 increases from 0 to f. During this process, only the clamping force on the clutch k1 and the brake k2 are changed, the elastic member 8 does not change, and the positions of the sliding cylinder 6, the sliding sleeve 7, the clutch k1 and the brake k2 do not change. When t=t3, as shown in Fig. 5, the first friction ring 60 and the second friction ring 50 are in zero-pressure contact.

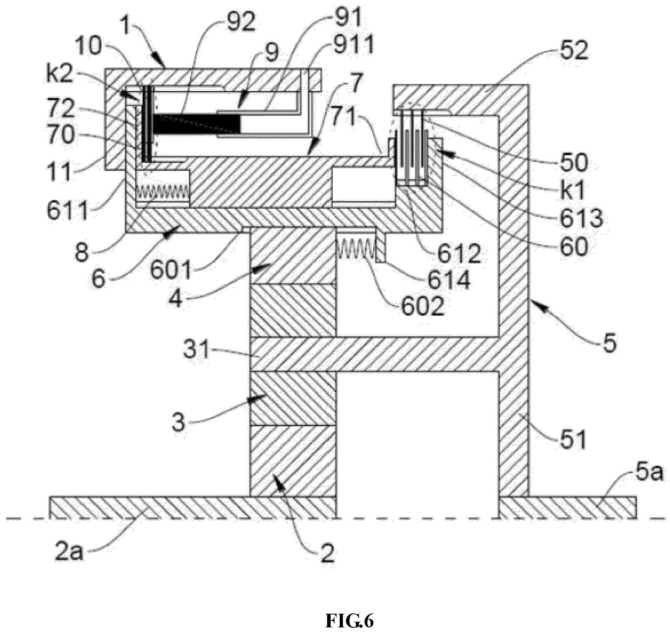

As the oil pressure in the pressure cylinder 91 continues to increase, when the compression force provided by the piston 92 to the brake k2 is greater than the preload elastic force of the elastic member 8, the planetary transmission A enters the fourth stage. Figure 6 is a schematic structural diagram of the fourth and fifth stages of an embodiment of the planetary transmission of the present invention. As shown in Figure 6, under the action of the piston 92, the brake k2 and the sliding sleeve 7 translate to the left together and compress the elastic member 8 until the second clamping portion 72 of the sliding sleeve 7 comes into contact with the first limiting ring 611 of the sliding cylinder 6. This fourth stage corresponds to the period when t is in (t3, t4] in Figure 2, where the elastic force of the elastic member 8 increases from f to f+Δf1, the clamping force F1 of the clutch k1 remains at 0, and the clamping force of the brake k2 F2 increases from f to f+Δf1. At t=t3, as shown in Figure 6, the first friction ring 60 and the second friction ring 50 change from zero-pressure contact to complete separation (a gap appears between the first friction ring 60 and the second friction ring 50), clutch k1 is fully disengaged and brake k2 is fully engaged. In this state, the ring gear 4 is braked by the housing 1, and the speed ratio of the planetary transmission A is i. This speed ratio i is suitable for working conditions that require high torque output, such as vehicle climbing and starting.

If it is necessary to continue to increase the clamping force of brake k2 to adapt to different types of equipment such as vehicles, ships, airplanes, etc., it is only necessary to further increase the oil pressure. Correspondingly, the planetary transmission A enters the fifth stage. This fifth stage corresponds to the period when t is at (t4, t5) in Figure 2. The clamping force F2 of the brake k2 increases from f+Δf1 to f+Δf1+Δf2. The size of the elastic member 8 remains unchanged and the elastic force remains unchanged. As shown in Figure 6, the force exerted by piston 92 is transmitted to the housing 1 through the second clamping portion 72, the first limiting ring 611 and the limiting portion 11, which can effectively prevent the ring gear 4 from being subjected to excessive axial force, thereby ensuring the stability of the planetary transmission A.

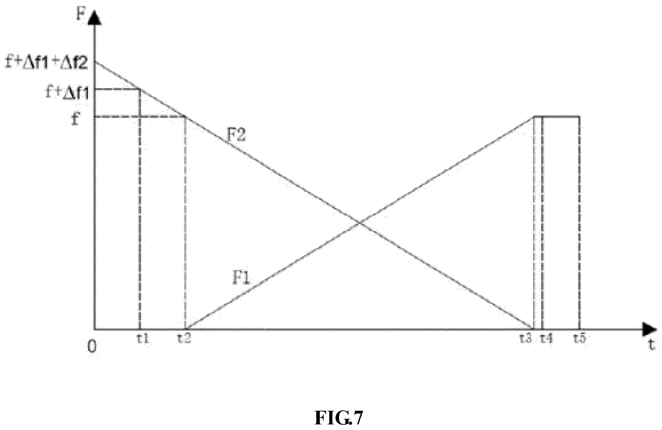

If it is necessary to switch the speed ratio of the planetary transmission A from i back to 1, simply gradually reduce the oil pressure in the pressure cylinder 91 and make the piston 92 gradually move to the right (reverse direction). Figure 7 is a force analysis diagram of each component during the clutch engagement process in an embodiment of the planetary transmission of the present invention. As shown in Figure 7, during the gradual engagement process of clutch k1, the planetary transmission A sequentially goes through the fifth stage to the first stage, and finally returns to the initial state, wherein the fifth stage corresponds to t being in the (0, t1) period , the fourth stage corresponds to t being in the [t1, t2) period, the third stage corresponds to t being in the [t2, t3) period, the second stage corresponds to t being in the [t3, t4) period, and the first stage corresponds to t being in the [t4, t5) period, when t is at t5, the planetary transmission A returns to the initial state. It is easy to understand that in each of the above-mentioned time intervals, the motion state and stress state of each component are opposite to those when the brake k2 is gradually engaged, so no further description will be given.

In summary, when switching the speed ratio of the planetary transmission A, the embodiment of the present invention only needs to adjust the controller 9 as an actuator to achieve the linkage adjustment of the clutch k1 and the brake k2. Therefore, the structure of the planetary transmission A is simplified and the operation is simple and convenient. When switching the speed ratio, it can achieve uninterrupted power transition, thereby making the vehicle run smoother.

So far, the technical solution of the present invention has been described with reference to the preferred embodiments shown in the accompanying drawings. However, those skilled in the art can easily understand that the protection scope of the present invention is obviously not limited to these specific embodiments, and it is defined by the appedned claims.

## Claims

1. A planetary transmission (A), comprising:
a housing (1);
a sun gear (2) fixed in the housing (1);
a ring gear (4) arranged around the outside of the sun gear (2);
a plurality of planetary gears (3); and
a planetary carrier (5);
wherein each of the planetary gears (3) is respectively arranged on a planetary shaft (31) and is meshed with the sun gear (2) and the ring gear (4) at the same time; and the planetary carrier (5) is fixedly connected to each of the planetary shafts (31);
wherein the planetary transmission (A) further comprises:
a sliding cylinder (6) arranged on the outside of the ring gear (4) and being rotatably fixed to and axially movable relative to the ring gear (4);
a sliding sleeve (7) arranged on the outside of the sliding cylinder (6) and being rotatably fixed to and axially movable relative to the sliding cylinder (6);
an elastic member (8) mounted between the sliding cylinder (6) and the sliding sleeve (7);
a first friction ring (60) mounted on the sliding cylinder (6) and being rotatably fixed to and axially movable relative to the sliding cylinder (6);
a second friction ring (50) mounted on the planetary carrier (5) and being rotatably fixed to and axially movable relative to the planetary carrier (5);
a third friction ring (70) mounted on the sliding sleeve (7) and being rotatably fixed to and axially movable relative to the sliding sleeve (7);
a fourth friction ring (10) mounted on the housing (1) and being rotatably fixed to and axially movable relative to the housing (1); and
a controller (9) mounted on the housing (1) and configured to oppose the fourth friction ring (10);
wherein the first friction ring (60) and the second friction ring (50) are alternately distributed and mounted between the sliding sleeve (7) and the sliding cylinder (6) and are configured to engage with the action of the elastic member (8) and disengage with the action of the controller (9); and
wherein the third friction ring (70) and the fourth friction ring (10) are alternately distributed and mounted between the controller (9) and the sliding sleeve (7) and are configured to be separated or engaged by the action of the controller (9).

2. The planetary transmission (A) of claim 1, wherein the planetary transmission (A) further comprises:
an input end (2a) connected to the sun gear (2); and
an output end (5a) connected to the planetary carrier (5).

3. The planetary transmission (A) of claim 1, wherein a first limiting ring (611) is fixed on the sliding cylinder (6), and the elastic member (8) has a preload push force and one end thereof is connected to the first limiting ring (611), the other end of which is connected to the sliding sleeve (7).

4. The planetary transmission (A) of claim 1, wherein a second limiting ring (612) is fixed on the sliding cylinder (6), and the elastic member (8) has a preload pull force and one end thereof is connected to the second limiting ring (612), the other end of which is connected to the sliding sleeve (7).

5. The planetary transmission (A) of any one of claims 1 to 4, wherein a limiting portion (11), preventing the ring gear (4) from being subjected to excessive axial force, is fixed on the housing (1), and the limiting portion (11) is opposite to the left end of the sliding cylinder (6).

6. The planetary transmission (A) of any one of claims 1 to 4,
wherein the sliding cylinder (6) is connected to the ring gear (4) through a spline, and
wherein optionally a limiting platform (601) is fixed on the sliding cylinder (6) to cooperate with the ring gear (4) and wherein in particular a return member (602) is fixed between the sliding cylinder (6) and the ring gear (4).

7. The planetary transmission (A) of any one of claims 1 to 4, wherein the elastic member (8) comprises a plurality of springs, and the plurality of springs are arranged along the circumferential direction of the sliding cylinder (6), and wherein optionally a preload adjusting member is fixed at an end of the elastic member (8).

8. The planetary transmission (A) of any one of claims 1 to 4, wherein the elastic member (8) comprises a disc spring, and the disc spring is arranged on the sliding cylinder (6).

9. The planetary transmission (A) of any one of claims 1 to 4, wherein a third limiting ring (613) is fixed on the sliding cylinder (6), and the third limiting ring (613) contacts the first friction ring (60), and wherein the sliding sleeve (7) optionally has a first clamping portion (71), the first clamping portion (71) is opposite to the third limiting ring (613) and contacts the first friction ring (60); the alternatingly distributed first friction ring (60) and the second friction ring (50) are arranged between the first clamping portion (71) and the third limiting ring (613).

10. The planetary transmission (A) of any one of claims 1 to 4, wherein the sliding sleeve (7) is connected to the sliding cylinder (6) through a spline.

11. The planetary transmission (A) of any one of claims 1 to 4, wherein the sliding sleeve (7) has a second clamping portion (72), the second clamping portion (72) is opposite to the controller (9) and contacts the third friction ring (70); the alternately distributed third friction ring (70) and the fourth friction ring (10) are arranged between the second clamping portion (72) and the controller (9).

12. The planetary transmission (A) of claim 11, wherein the controller (9) comprises:
a pressure cylinder (91), the active end of the pressure cylinder (91) faces the second clamping portion (72), and a liquid inlet (911) of the pressure cylinder (91) extends to the surface of the housing (1); and
a piston (92) is slidably assembled in the pressure cylinder (91) and contacts the fourth friction ring (10).

13. The planetary transmission (A) of any one of claims 1 to 4, wherein the first friction ring (60) is connected to the sliding cylinder (6) through a spline, the second friction ring (50) is connected to the planetary carrier (5) through a spline, the third friction ring (70) is connected to the sliding sleeve (7) through a spline, and the fourth friction ring (10) is connected to the housing (1) through a spline.

14. A power assembly, comprising:
a driver; and
the planetary transmission (A) according to any one of claims 1 to 13;
wherein the power of the driver is input from the sun gear (2).

15. A vehicle, comprising:
a vehicle body; and
the power assembly of claim 14;
wherein the power assembly is mounted on the vehicle body.

## Patentansprüche

1. Planetengetriebe (A), umfassend:
ein Gehäuse (1);
ein Sonnenrad (2), das im Gehäuse (1) befestigt ist;
ein Hohlrad (4), das um die Außenseite des Sonnenrads (2) herum angeordnet ist; eine Mehrzahl von Planetenrädern (3); und
einen Planetenträger (5);
wobei jedes der Planetenräder (3) jeweils auf einer Planetenwelle (31) angeordnet ist und sowohl mit dem Sonnenrad (2) als auch mit dem Hohlrad (4) in Eingriff steht; und der Planetenträger (5) fest mit jeder der Planetenwellen (31) verbunden ist;
wobei das Planetengetriebe (A) ferner umfasst:
einen Gleitzylinder (6), der an der Außenseite des Hohlrads (4) angeordnet und drehfest mit dem Hohlrad (4) verbunden und relativ zu diesem axial bewegbar ist;
eine Gleithülse (7), die an der Außenseite des Gleitzylinders (6) angeordnet und drehfest mit dem Gleitzylinder (6) verbunden und relativ zu diesem axial bewegbar ist;
ein elastisches Element (8), das zwischen dem Gleitzylinder (6) und der Gleithülse (7) angebracht ist;
einen ersten Reibring (60), der am Gleitzylinder (6) angebracht und drehfest mit dem Gleitzylinder (6) verbunden und relativ zu diesem axial bewegbar ist;
einen zweiten Reibring (50), der am Planetenträger (5) angebracht und drehfest mit dem Planetenträger (5) verbunden und relativ zu diesem axial bewegbar ist;
einen dritten Reibring (70), der an der Gleithülse (7) angebracht und drehfest mit der Gleithülse (7) verbunden und relativ zu dieser axial bewegbar ist;
einen vierten Reibring (10), der am Gehäuse (1) angebracht und drehfest mit dem Gehäuse (1) verbunden und relativ zu diesem axial bewegbar ist; und
eine Betätigungseinrichtung (9), die am Gehäuse (1) angebracht und dazu eingerichtet ist, gegen den vierten Reibring (10) zu wirken;
wobei der erste Reibring (60) und der zweite Reibring (50) abwechselnd angeordnet und zwischen der Gleithülse (7) und dem Gleitzylinder (6) angebracht sind und dazu eingerichtet sind, durch die Wirkung des elastischen Elements (8) in Eingriff zu kommen und durch die Wirkung der Betätigungseinrichtung (9) außer Eingriff zu kommen; und
wobei der dritte Reibring (70) und der vierte Reibring (10) abwechselnd angeordnet und zwischen der Betätigungseinrichtung (9) und der Gleithülse (7) angebracht sind und dazu eingerichtet sind, durch die Wirkung der Betätigungseinrichtung (9) getrennt oder in Eingriff gebracht zu werden.

2. Planetengetriebe (A) nach Anspruch 1, wobei das Planetengetriebe (A) ferner umfasst:
ein Eingangsende (2a), das mit dem Sonnenrad (2) verbunden ist; und
ein Ausgangsende (5a), das mit dem Planetenträger (5) verbunden ist.

3. Planetengetriebe (A) nach Anspruch 1, wobei ein erster Begrenzungsring (611) auf dem Gleitzylinder (6) befestigt ist und das elastische Element (8) eine Vorspann-Druckkraft aufweist und ein Ende davon mit dem ersten Begrenzungsring (611) verbunden ist, dessen anderes Ende mit der Gleithülse (7) verbunden ist.

4. Planetengetriebe (A) nach Anspruch 1, wobei ein zweiter Begrenzungsring (612) auf dem Gleitzylinder (6) befestigt ist und das elastische Element (8) eine Vorspann-Zugkraft aufweist und ein Ende davon mit dem zweiten Begrenzungsring (612) verbunden ist, dessen anderes Ende mit der Gleithülse (7) verbunden ist.

5. Planetengetriebe (A) nach einem der Ansprüche 1 bis 4, wobei ein Begrenzungsabschnitt (11), der verhindert, dass das Hohlrad (4) einer übermäßigen Axialkraft ausgesetzt wird, am Gehäuse (1) befestigt ist und der Begrenzungsabschnitt (11) dem linken Ende des Gleitzylinders (6) gegenüberliegt.

6. Planetengetriebe (A) nach einem der Ansprüche 1 bis 4,
wobei der Gleitzylinder (6) über eine Keilverzahnung mit dem Hohlrad (4) verbunden ist, und
wobei optional ein Begrenzungsvorsprung (601) am Gleitzylinder (6) befestigt ist, um mit dem Hohlrad (4) zusammenzuwirken, und wobei insbesondere ein Rückstellelement (602) zwischen dem Gleitzylinder (6) und dem Hohlrad (4) befestigt ist.

7. Planetengetriebe (A) nach einem der Ansprüche 1 bis 4, wobei das elastische Element (8) eine Mehrzahl von Federn umfasst und die Mehrzahl von Federn entlang der Umfangsrichtung des Gleitzylinders (6) angeordnet ist, und wobei optional ein Vorspannungs-Einstellelement an einem Ende des elastischen Elements (8) befestigt ist.

8. Planetengetriebe (A) nach einem der Ansprüche 1 bis 4, wobei das elastische Element (8) eine Tellerfeder umfasst und die Tellerfeder auf dem Gleitzylinder (6) angeordnet ist.

9. Planetengetriebe (A) nach einem der Ansprüche 1 bis 4, wobei ein dritter Begrenzungsring (613) auf dem Gleitzylinder (6) befestigt ist und der dritte Begrenzungsring (613) den ersten Reibring (60) kontaktiert, und wobei die Gleithülse (7) optional einen ersten Klemmabschnitt (71) aufweist, der erste Klemmabschnitt (71) dem dritten Begrenzungsring (613) gegenüberliegt und den ersten Reibring (60) kontaktiert; der erste Reibring (60) und der zweite Reibring (50), die abwechselnd angeordnet sind, zwischen dem ersten Klemmabschnitt (71) und dem dritten Begrenzungsring (613) angeordnet sind.

10. Planetengetriebe (A) nach einem der Ansprüche 1 bis 4, wobei die Gleithülse (7) über eine Keilverzahnung mit dem Gleitzylinder (6) verbunden ist.

11. Planetengetriebe (A) nach einem der Ansprüche 1 bis 4, wobei die Gleithülse (7) einen zweiten Klemmabschnitt (72) aufweist, der zweite Klemmabschnitt (72) der Betätigungseinrichtung (9) gegenüberliegt und den dritten Reibring (70) kontaktiert; der dritte Reibring (70) und der vierte Reibring (10), die abwechselnd angeordnet sind, zwischen dem zweiten Klemmabschnitt (72) und der Betätigungseinrichtung (9) angeordnet sind.

12. Planetengetriebe (A) nach Anspruch 11, wobei die Betätigungseinrichtung (9) umfasst:
einen Druckzylinder (91), wobei das aktive Ende des Druckzylinders (91) dem zweiten Klemmabschnitt (72) zugewandt ist und ein Flüssigkeitseinlass (911) des Druckzylinders (91) sich zur Oberfläche des Gehäuses (1) erstreckt; und
einen Kolben (92), der gleitend im Druckzylinder (91) montiert ist und den vierten Reibring (10) kontaktiert.

13. Planetengetriebe (A) nach einem der Ansprüche 1 bis 4, wobei der erste Reibring (60) über eine Keilverzahnung mit dem Gleitzylinder (6) verbunden ist, der zweite Reibring (50) über eine Keilverzahnung mit dem Planetenträger (5) verbunden ist, der dritte Reibring (70) über eine Keilverzahnung mit der Gleithülse (7) verbunden ist und der vierte Reibring (10) über eine Keilverzahnung mit dem Gehäuse (1) verbunden ist.

14. Antriebseinheit, umfassend:
einen Antrieb; und
ein Planetengetriebe (A) nach einem der Ansprüche 1 bis 13;
wobei die Leistung des Antriebs vom Sonnenrad (2) eingeleitet wird.

15. Fahrzeug, umfassend:
eine Fahrzeugkarosserie; und
eine Antriebseinheit nach Anspruch 14;
wobei die Antriebseinheit an der Fahrzeugkarosserie montiert ist.

## Revendications

1. Engrenage planétaire (A) comprenant:
un carter (1);
un pignon solaire (2) fixé dans le carter (1);
une couronne dentée (4) disposée autour de la face extérieure du pignon solaire (2);
une pluralité de pignons planétaires (3); et
un porte-satellites (5);
dans lequel chacun des pignons planétaires (3) est disposé respectivement sur un arbre planétaire (31) et est en prise aussi bien avec le pignon solaire (2) qu'avec la couronne dentée (4); et le porte-satellites (5) est connecté de manière fixe à chacun des arbres planétaires (31);
dans lequel l'engrenage planétaire (A) comprend en outre:
un cylindre coulissant (6) qui est disposé sur la face extérieure de la couronne dentée (4) et est relié de manière solidaire en rotation à la couronne dentée (4) et est axialement mobile par rapport à celle-ci;
un manchon coulissant (7) qui est disposé sur la face extérieure du cylindre coulissant (6) et est relié de manière solidaire en rotation au cylindre coulissant (6) et est axialement mobile par rapport à celui-ci;
un élément élastique (8) qui est monté entre le cylindre coulissant (6) et le manchon coulissant (7);
une première bague de friction (60) qui est montée sur le cylindre coulissant (6) et est reliée de manière solidaire en rotation au cylindre coulissant (6) et est axialement mobile par rapport à celui-ci;
une deuxième bague de friction (50) qui est montée sur le porte-satellites (5) et est reliée de manière solidaire en rotation au porte-satellites (5) et est axialement mobile par rapport à celui-ci;
une troisième bague de friction (70) qui est montée sur le manchon coulissant (7) et est reliée de manière solidaire en rotation au manchon coulissant (7) et est axialement mobile par rapport à celui-ci;
une quatrième bague de friction (10) qui est montée sur le carter (1) et est reliée de manière solidaire en rotation au carter (1) et est axialement mobile par rapport à celui-ci;et
un dispositif de commande (9) qui est monté sur le carter (1) et est configuré pour s'opposer à la quatrième bague de friction (10);
dans lequel la première bague de friction (60) et la deuxième bague de friction (50) sont disposées alternativement et sont montées entre le manchon coulissant (7) et le cylindre coulissant (6), et sont configurées pour s'engager sous l'action de l'élément élastique (8) et se désengager sous l'action du dispositif de commande (9); et
dans lequel la troisième bague de friction (70) et la quatrième bague de friction (10) sont disposées alternativement et sont montées entre le dispositif de commande (9) et le manchon coulissant (7), et sont configurées pour se séparer ou s'engager sous l'action du dispositif de commande (9).

2. Engrenage planétaire (A) selon la revendication 1, dans lequel l'engrenage planétaire (A) comprend en outre:
une extrémité d'entrée (2a) reliée à la roue solaire (2); et
une extrémité de sortie (5a) reliée au porte-satellites (5).

3. Engrenage planétaire (A) selon la revendication 1, dans lequel une première bague de limitation (611) est fixée sur le cylindre coulissant (6), et l'élément élastique (8) présente une force de pression de précontrainte et une extrémité de celui-ci est reliée à la première bague de limitation (611), l'autre extrémité de celui-ci étant reliée au manchon coulissant (7).

4. Engrenage planétaire (A) selon la revendication 1, dans lequel une deuxième bague de limitation (612) est fixée sur le cylindre coulissant (6), et l'élément élastique (8) présente une force de traction de précontrainte et une extrémité de celui-ci est reliée à la deuxième bague de limitation (612), l'autre extrémité de celui-ci étant reliée au manchon coulissant (7).

5. Engrenage planétaire (A) selon l'une quelconque des revendications 1 à 4, dans lequel une portion de limitation (11), empêchant la couronne dentée (4) d'être soumise à une force axiale excessive, est fixée sur le carter (1), et la portion de limitation (11) est opposée à l'extrémité gauche du cylindre coulissant (6).

6. Engrenage planétaire (A) selon l'une quelconque des revendications 1 à 4,
dans lequel le cylindre coulissant (6) est relié à la couronne dentée (4) par une cannelure, et
dans lequel, en option, une projection de limitation (601) est fixée sur le cylindre coulissant (6) afin d'agir de concert avec la couronne dentée (4), et dans lequel, en particulier, un élément de rappel (602) est fixé entre le cylindre coulissant (6) et la couronne dentée (4).

7. Engrenage planétaire (A) selon l'une quelconque des revendications 1 à 4, dans lequel l'élément élastique (8) comprend une pluralité de ressorts, et la pluralité de ressorts sont disposés le long de la direction circonférentielle du cylindre coulissant (6), et dans lequel, en option, un élément de réglage de précontrainte est fixé à une extrémité de l'élément élastique (8).

8. Engrenage planétaire (A) selon l'une quelconque des revendications 1 à 4, dans lequel l'élément élastique (8) comprend un ressort à disques, et le ressort à disques est disposé sur le cylindre coulissant (6).

9. Engrenage planétaire (A) selon l'une quelconque des revendications 1 à 4, dans lequel une troisième bague de limitation (613) est fixée sur le cylindre coulissant (6), et la troisième bague de limitation (613) est en contact avec la première bague de friction (60), et dans lequel le manchon coulissant (7) comprend en option une première portion de serrage (71), la première portion de serrage (71) est opposée à la troisième bague de limitation (613) et est en contact avec la première bague de friction (60); la première bague de friction (60) et la deuxième bague de friction (50), qui sont disposées alternativement, sont disposées entre la première portion de serrage (71) et la troisième bague de limitation (613).

10. Engrenage planétaire (A) selon l'une quelconque des revendications 1 à 4, dans lequel le manchon coulissant (7) est relié au cylindre coulissant (6) par une cannelure.

11. Engrenage planétaire (A) selon l'une quelconque des revendications 1 à 4, dans lequel le manchon coulissant (7) comprend une deuxième portion de serrage (72), ladite deuxième portion de serrage (72) est opposée au dispositif de commande (9) et est en contact avec la troisième bague de friction (70); la troisième bague de friction (70) et la quatrième bague de friction (10), qui sont disposées alternativement, sont disposées entre la deuxième portion de serrage (72) et le dispositif de commande (9).

12. Engrenage planétaire (A) selon la revendication 11, dans lequel le dispositif de commande (9) comprend:
un vérin de pression (91), l'extrémité active du vérin de pression (91) étant orientée vers la deuxième portion de serrage (72), et une entrée de liquide (911) du vérin de pression (91) s'étend jusqu'à la surface du carter (1); et
un piston (92) qui est monté de manière coulissante dans le vérin de pression (91) et est en contact avec la quatrième bague de friction (10).

13. Engrenage planétaire (A) selon l'une quelconque des revendications 1 à 4, dans lequel la première bague de friction (60) est reliée au cylindre coulissant (6) par une cannelure, la deuxième bague de friction (50) est reliée au porte-satellites (5) par une cannelure, la troisième bague de friction (70) est reliée au manchon coulissant (7) par une cannelure, et la quatrième bague de friction (10) est reliée au carter (1) par une cannelure.

14. Ensemble de puissance comprenant:
un entraînement; et
l'engrenage planétaire (A) selon l'une quelconque des revendications 1 à 13,
dans lequel la puissance de l'entraînement est fournie par le pignon solaire (2).

15. Véhicule comprenant:
une carrosserie; et
l'ensemble de puissance selon la revendication 14;
dans lequel l'ensemble de puissance est monté sur la carrosserie.
